# EUROPEAN PATENT APPLICATION

(11) **EP 4 683 177 A1**
(43) Date of publication of application: **21.01.2026**
(21) Application number: 24822532.8
(22) Date of filing: 27.05.2024
(51) Int. Cl.: H02K 1/28

(54) **ELECTRIC TOOL AND CHAINSAW**

(30) Priority: 16.06.2023 CN 202310723350
(71) Applicant: Nanjing Chervon Industry Co., Ltd., Nanjing, Jiangsu 211106 (CN)
(72) Inventor: XU, Qian, Nanjing, Jiangsu 211106 (CN); WANG, Yong, Nanjing, Jiangsu 211106 (CN)
(74) Representative: Sun, Yiming
(86) International application number: PCT/CN2024/095511
(87) International publication number: WO 2024/255580

(57) **Abstract**

Provided are a power tool and a chainsaw. The power tool includes a motor, a power supply device, and an output portion. The motor is used for providing power for the power tool. The motor includes a stator and a rotor rotating relative to the stator. The rotor includes a rotor core and magnetic steels disposed on the rotor core. The power supply device is electrically connected to at least the motor. The output portion is driven by the motor. The rotor core includes limiting portions arranged at intervals around an axis L, and the limiting portions are used for fixing the magnetic steels. The preceding technical solutions are adopted, which is conducive to reducing the mass of the motor, thereby reducing the loss of the motor and improving the efficiency of the motor.

## Description

The present application claims priority to Chinese Patent Application No. 202310723350.X filed with the China National Intellectual Property Administration (CNIPA) on Jun. 16, 2023, the disclosure of which is incorporated herein by reference in its entirety.

### TECHNICAL FIELD

The present application relates to a power tool and a chainsaw and, in particular, to a power tool and a chainsaw in each of which magnets are fixed by limiting portions arranged at intervals around the axis of a rotor core.

### BACKGROUND

High-power power tools such as chainsaws and snow throwers are increasingly favored by the market. All high-power power tools require electric motors with higher power and efficiency. Therefore, the electric motors for high-power power tools are developing towards higher power density, miniaturization, and lightweight. For a highfrequency electric motor, the electric motor core loss accounts for a relatively large proportion and is the main cause of heat generation, bringing about a sharp increase in the internal heat generation of the electric motor, resulting in an abnormal temperature rise of the electric motor, and affecting the service life of the electric motor.

Due to better heat dissipation performance, the outrunner is more suitable for high-power power tools. The permanent magnet of the outrunner is on the outer side of the stator and is located between the stator and the housing. When the rotor runs at high speed, the permanent magnet is subjected to multiple forces such as a centrifugal force and an electromagnetic force, leading to a risk that the permanent magnet falls off from the stator. Therefore, some measures need to be provided to prevent the permanent magnet from falling off. In addition, it is also particularly important that no additional production and process costs are incurred during production.

### SUMMARY

The present application provides a power tool and a chainsaw that are safer to use. Without incurring additional production and process costs, the power tool and the chainsaw can solve the problem of the permanent magnet in an outrunner falling off from the stator.

To achieve the preceding object, the present application adopts the technical solutions below.

In a first aspect, the present application provides a power tool. The power tool includes a motor, a power supply device, and an output portion.

The motor is used for providing power for the power tool, where the motor includes a stator and a rotor rotating relative to the stator, and the rotor includes a rotor core and magnetic steels disposed on the rotor core.

The power supply device is electrically connected to at least the motor.

The output portion is driven by the motor.

The rotor core includes limiting portions arranged at intervals around an axis L, and the limiting portions are used for fixing the magnetic steels.

In some examples, the limiting portion includes a first limiting portion and a second limiting portion, one of the first limiting portion and the second limiting portion is located at the head of the rotor core, and the other one of the first limiting portion and the second limiting portion is located at the tail of the rotor core.

In some examples, the limiting portion includes a first limiting portion and a second limiting portion, one of the first limiting portion and the second limiting portion is located in the middle of the rotor core, and the other one of the first limiting portion and the second limiting portion is located at the head and/or tail of the rotor core.

In some examples, the limiting portion includes a first limiting portion, and the thickness of the first limiting portion ranges from 1 mm to 2 mm.

Moreover/alternatively, the limiting portion includes a second limiting portion, and the thickness of the second limiting portion ranges from 1 mm to 2 mm.

In some examples, the limiting portion forms a dovetail groove, and the magnetic steel is inserted into the dovetail groove along the direction of the axis L of the rotor core.

In some examples, the limiting portion is lower than the magnetic steel in the circumferential direction.

In some examples, the magnetic steel is fan-shaped and includes an inner arc and an outer arc, the inner arc and the outer arc are concentrically arranged, and the distance between the center of the inner arc or the outer arc and the axis L of the rotor core ranges from 50 mm to 100 mm.

In some examples, the rotor core includes multiple laminations stacked along the direction of the axis L, and the multiple laminations are made of silicon steel.

In some examples, the rotor further includes a fastening sleeve sleeved on the outer circumference of the rotor core, and the fastening sleeve has no magnetic conductivity.

In some examples, the rotor further includes a first fixing member fixed to an end of the rotor core, and the first fixing member is used for constraining the magnetic steels axially and circumferentially.

In some examples, the rotor further includes a second fixing member fixed to the other end of the rotor core, and the second fixing member is used for constraining the magnetic steels radially.

In some examples, the rated output power of the motor ranges from 3000 W to 7000 W.

In some examples, the maximum rotational speed range of the motor is greater than or equal to 20000 rpm.

In some examples, the power tool includes at least one of a chainsaw, a snow thrower, a hedge trimmer, a mower, and a direct current fan.

In some examples, the motor is an outrunner.

In a second aspect, the present application provides a power tool. The power tool includes a motor, a power supply device, and an output portion.

The motor is used for providing power for the power tool, where the motor includes a stator and a rotor rotating relative to the stator, the rotor is at least partially disposed on an outer side of the stator, and the rotor includes a rotor core and magnetic steels disposed on the rotor core.

The power supply device is electrically connected to at least the motor.

The output portion is driven by the motor.

The rotor core includes multiple laminations arranged along the direction of an axis L, and the multiple laminations have at least two different shapes so that the multiple laminations include at least first laminations each having a first shape and second laminations each having a second shape.

In some examples, the projections of the first lamination and the second lamination on a first plane have different shapes, and the first plane is perpendicular to an output shaft.

In a third aspect, the present application provides a power tool. The power tool includes a motor, a power supply device, and an output portion.

The motor is used for providing power for the power tool, where the motor includes a stator and a rotor rotating relative to the stator, and the rotor includes a rotor core and magnetic steels disposed on the rotor core.

The power supply device is electrically connected to at least the motor.

The output portion is driven by the motor.

Limiting portions for fixing the magnetic steels are formed on an inner wall of the rotor core, and the ratio of the total length of the limiting portion in a direction of an axis L to the length of the magnetic steel in the direction of the axis L ranges from 0.01 to 0.9.

In some examples, the ratio of the total length of the limiting portion in the direction of the axis L to the length of the magnetic steel in the direction of the axis L ranges from 0.1 to 0.2.

In some examples, one or more limiting portions are provided.

In a fourth aspect, the present application provides a power tool. The power tool includes a stator and a rotor.

The rotor rotates relative to the stator, and the rotor includes a rotor core and magnetic steels disposed on the rotor core.

The rotor core includes limiting portions arranged at intervals around of an axis L, and the limiting portions are used for fixing the magnetic steels.

In some examples, the motor is an outrunner.

In some examples, the rated power of the motor is greater than or equal to 1000 W and less than or equal to 7000 W.

In a fifth aspect, the present application provides a chainsaw. The chainsaw includes a housing, a saw chain, a guide plate, and a motor. The saw chain is disposed around the periphery of the guide plate, an end of the guide plate is supported on the housing, and the other end of the guide plate extends out of the housing along the lengthwise direction of the housing. The motor is used for driving the saw chain to perform cutting. The rated rotational speed of the motor is greater than or equal to 10000 rpm and less than or equal to 20000 rpm, and the ratio of the rated power of the motor to the weight of a stator of the motor is greater than or equal to 6 W/g and less than or equal to 14 W/g.

In some examples, the rated rotational speed of the motor is greater than or equal to 10000 rpm and less than or equal to 17000 rpm.

In some examples, the ratio of the outer diameter of the stator to the outer diameter of a rotor is higher than or equal to 0.7.

In some examples, the power density of the motor is greater than or equal to 2000 W/kg.

In some examples, a support member is disposed at the radial center of the stator and includes a rim portion and a spoke portion.

In some examples, the pole arc coefficient of a rotor of the motor is greater than or equal to 0.6 and less than 1.

In some examples, the stator includes a stator core and stator windings, the stator core has multiple radially extending teeth, each of the stator windings is wound around a respective one of the multiple teeth, the width of each of the multiple teeth is not constant in a radial direction, and the width of each of the multiple teeth refers to the width of each of the multiple teeth in a direction perpendicular to an extension direction of each of the multiple teeth.

In some examples, the ratio of the maximum width to the minimum width of each of the multiple teeth is greater than 1 and less than or equal to 1.8.

In some examples, a rotor of the motor includes a rotor core and magnetic steels, and the magnetic steels are fixed to the rotor core through overmolding.

In some examples, the motor further includes a bracket, the stator and a rotor are sleeved on the bracket, the support member and the bracket are disposed coaxially, and the bracket is formed with an air inlet and an air outlet through which the cooling airflow passes.

In some examples, the motor further includes a fan and a motor housing, and the motor housing and the fan are integrally formed.

In some examples, a rotor of the motor includes a rotor core, and limiting bosses for limiting the rotor core in an axial direction are formed on an inner wall of a motor housing.

In some examples, the support member is made of metal or modified plastic.

In some examples, a rotor of the motor is sleeved outside the stator, and a support member is disposed inside the stator to support the stator.

In some examples, the rated output power of the motor ranges from 3000 W to 7000 W.

In a sixth aspect, the present application provides a power tool. The power tool includes a housing, an output portion, and a motor. The motor is disposed in the housing, and the motor includes a stator, a rotor, and an output shaft. The stator includes a stator core and stator windings. The rotor includes a rotor core and magnetic steels, where the rotor is disposed on the outer circumference of the stator and is rotatable relative to the stator. The output shaft is coupled to the rotor to drive the output portion. The rated rotational speed of the motor is greater than or equal to 20000 rpm, and the ratio of the rated power of the motor to the volume of the stator is greater than or equal to 50 W/cm3.

In some examples, the power tool is a blower.

In some examples, the ratio of the outer diameter of the stator to the outer diameter of the rotor is higher than or equal to 0.7.

In a seventh aspect, the present application provides a power tool. The power tool includes a housing, an output portion, and an electric motor. The electric motor is disposed in the housing, and the electric motor includes a stator, a rotor, and an output shaft. The stator includes a stator core and stator windings. The rotor includes a rotor core and magnetic steels, where the rotor is disposed on the outer circumference of the stator and is rotatable relative to the stator. The output shaft is coupled to the rotor to drive the output portion. The rated power of the electric motor is greater than or equal to 3000 W and less than or equal to 7000 W, and the air gap ratio of the electric motor is greater than or equal to 0.7.

In some examples, the outer diameter of the rotor is greater than or equal to 35 mm and less than or equal to 105 mm.

In an eighth aspect, the present application provides a power tool. The power tool includes a motor, a power supply device, and an output portion.

The motor is used for providing power for the power tool, where the motor includes a stator and a rotor rotating relative to the stator. The power supply device is electrically connected to at least the motor. The output portion is driven by the motor. A support member is disposed at the radial center of the stator and includes a rim portion and a spoke portion.

In some examples, the power tool further includes a housing formed with an accommodation space, the output portion includes a functional piece, and the motor is disposed in the accommodation space of the housing and drives the functional piece to implement a corresponding function.

In some examples, the rotor is sleeved outside the stator, and the support member is disposed in the stator to support the stator.

In some examples, the support member is made of metal or modified plastic.

In some examples, the ratio of the outer diameter of the stator to the outer diameter of the rotor is higher than or equal to 0.7.

In some examples, the pole arc coefficient of the rotor is greater than or equal to 0.6 and less than 1.

In some examples, the power density of the motor is greater than or equal to 2000 W/kg.

In some examples, the stator includes a stator core and stator windings, the stator core has multiple radially extending teeth, each of the stator windings is wound around a respective one of the multiple teeth, the width of each of the multiple teeth is not constant in a radial direction, and the width of each of the multiple teeth refers to the width of each of the multiple teeth in a direction perpendicular to an extension direction of each of the multiple teeth.

In some examples, the ratio of the maximum width to the minimum width of each of the multiple teeth is greater than 1 and less than or equal to 1.8.

In some examples, the rotor includes a rotor core and magnetic steels, and the magnetic steels are fixed to the rotor core through overmolding.

In some examples, the motor further includes a bracket, the stator and a rotor are sleeved on the bracket, the support member and the bracket are disposed coaxially, and the bracket is formed with an air inlet and an air outlet through which the cooling airflow passes.

In some examples, the power tool further includes a fan, the motor further has a motor housing, and the motor housing and the fan are integrally formed.

In some examples, the rotor includes a rotor core, and limiting bosses for limiting the rotor core in an axial direction are formed on an inner wall of a motor housing.

The present application has the beneficial effects below.

The present application provides a power tool. The rotor core in the motor of the power tool includes the limiting portions arranged at intervals around the axis L, and the limiting portions are used for fixing the magnetic steels, thereby solving the problem of the magnetic steels falling off from the stator. Compared with the limiting portions with an integrated structure in the related art, the limiting portions are arranged at intervals so that the weight can be effectively reduced, thereby reducing the loss of the motor and improving the efficiency of the motor.

### BRIEF DESCRIPTION OF DRAWINGS

FIG. 1 is a structural view of a power tool.
FIG. 2 is a structural view of a motor.
FIG. 3 is a structural view of a stator and a rotor according to an example.
FIG. 4 is a structural view of a stator and magnetic steels according to an example from a first perspective.
FIG. 5 is an enlarged view of part A in FIG. 4.
FIG. 6 is a structural view of a stator and magnetic steels according to an example from a second perspective.
FIG. 7 is a sectional view of a motor according to an example.
FIG. 8 is a hierarchical view of a motor according to an example.
FIG. 9 is a schematic view of internal structures of a motor according to another example.
FIG. 10 is a structural view of a rotor according to another example from a first perspective.
FIG. 11 is an exploded view of a rotor according to another example.
FIG. 12 is an enlarged view of part B in FIG. 11.
FIG. 13 is a structural view of a rotor according to another example from a second perspective.
FIG. 14 is an exploded view of a motor according to an example.
FIG. 15 is a plan view of a stator, a rotor, and a motor housing in the motor shown in FIG. 14.
FIG. 16 is a sectional view of a rotor core, magnetic steels of a rotor, and plastic parts in the motor shown in FIG. 14.
FIG. 17 is a sectional view of a motor housing, a fan, and limiting bosses in the motor shown in FIG. 14.
FIG. 18 is a plan view of a stator core and stator windings in the motor shown in FIG. 14.
FIG. 19 is a plan view of a rotor, a stator, a support member, and an output shaft in the motor shown in FIG. 14.
FIG. 20 is a perspective view of a support member and a bracket in the motor shown in FIG. 14 according to an example.
FIG. 21 is a sectional view of a base, a tubular component, the support member, and a stator core in the motor shown in FIG. 20.
FIG. 22 is a perspective view of a bracket in the motor shown in FIG. 14 according to another example.
FIG. 23 is a sectional view of a base, a tubular component, and an output shaft in the motor shown in FIG. 22.

### Reference list

- 100: chainsaw
- 10: housing
- 11: rear handle
- 111: first switch
- 112: second switch
- 12: front handle
- 13: protective cover
- 14: coupling portion
- 15: right housing
- 16: left housing
- 17: main housing portion
- 21: saw chain
- 22: guide plate
- 30: power supply device
- 200: electric motor
- 210: stator
- 220: rotor
- 211: stator core
- 212: stator winding
- 221: rotor core
- 2211: first limiting portion
- 2212: second limiting portion
- 2213: dovetail groove
- 2214: first lamination
- 22141: first protrusion
- 22142: second protrusion
- 2215: second lamination
- 222: magnetic steel
- 223: first fixing member
- 2231: first connecting portion
- 2232: first fixing portion
- 224: second fixing member
- 2241: second connecting portion
- 2242: second fixing portion
- 225: fastening sleeve
- 226: output shaft
- 227: plastic part
- 230: electric motor housing
- 231: fan
- 232: limiting boss
- 240: support member
- 241: rim portion
- 242: spoke portion
- 250: bracket
- 251: base
- 2511: air inlet
- 252: tubular component
- 2521: air outlet

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

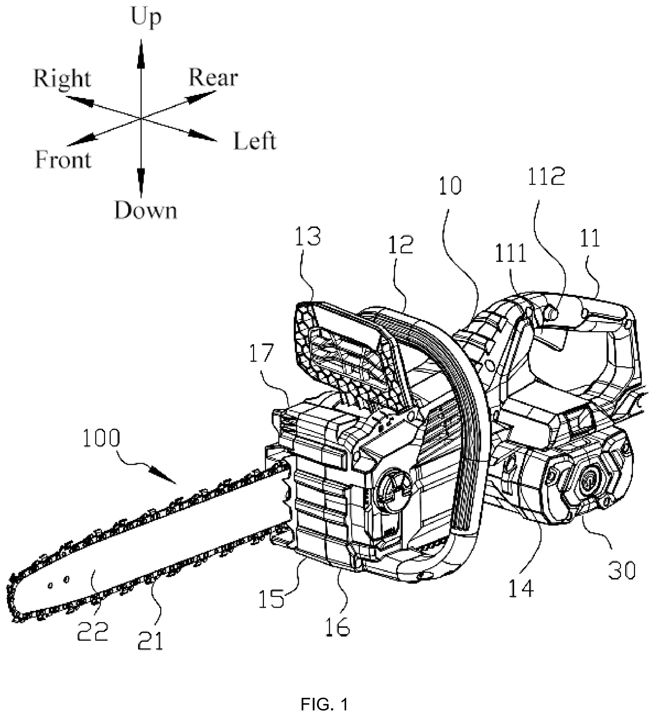

Referring to FIG. 1, the chainsaw 100 includes a housing 10, a saw chain 21, a sprocket supported in the housing 10 and capable of driving the saw chain 21 to move, and a guide plate 22 for supporting and guiding the saw chain 21. In some examples, the housing 10 includes a right housing 15 and a left housing 16, and the right housing 15 and the left housing 16 are assembled along the left and right direction to form the housing 10 and a first accommodation space. The housing 10 includes a main housing portion 17, and the main housing portion 17 is formed with or connected to a rear handle 11 for the user to hold and a front handle 12 for the user to lift and mate with the rear handle 11 to operate the chainsaw 100. In some examples, a switch for controlling the operation state of the chainsaw 100 is connected to the rear handle 11. Specifically, the switch includes a first switch 111 and a second switch 112. The chainsaw 100 can be started only when the user presses the first switch 111 and the second switch 112 at the same time, thereby avoiding the following: the user accidentally touches the first switch 111 to start the chainsaw 100 while holding the chainsaw 100, causing an accident. In some examples, the second switch 112 is generally used as a safety start switch, and the first switch 111 is generally used as a power-on and speed regulation switch. It is to be understood that when the chainsaw 100 is in use, the user presses the second switch 112 with the thumb and presses the first switch 111 with the index finger or the middle finger to start the chainsaw 100 and adjust the speed of the chainsaw 100.

The chainsaw 100 further includes a protective cover 13 on the front side of the front handle 12. The protective cover 13 is used for protecting the user and preventing the user from being cut by the saw chain 21 due to the recoil force when the user is operating the chainsaw 100. When the chainsaw 100 is in operation, some flying objects (such as sawdust) may be generated to scratch the surface of the user's hand holding the front handle 12.

The chainsaw 100 further includes a power supply device 30 for supplying electrical energy required for the operation of the chainsaw 100. The power supply device 30 includes a battery pack detachably connected to a coupling portion 14 formed by the housing 10. It is to be understood that the power supply device 30 is not limited to the battery pack and may power the circuit elements through mains power or an alternating current power supply in conjunction with corresponding rectifier, filter, and voltage regulator circuits. In some examples, the power supply device 30 includes multiple battery packs for providing the chainsaw 100 with a longer battery life and a greater power output. Specifically, the total energy of the power supply device 30 is greater than or equal to 20 Wh. The maximum rated voltage of the power supply device 30 is configured to be greater than or equal to 40 V and less than or equal to 100 V.

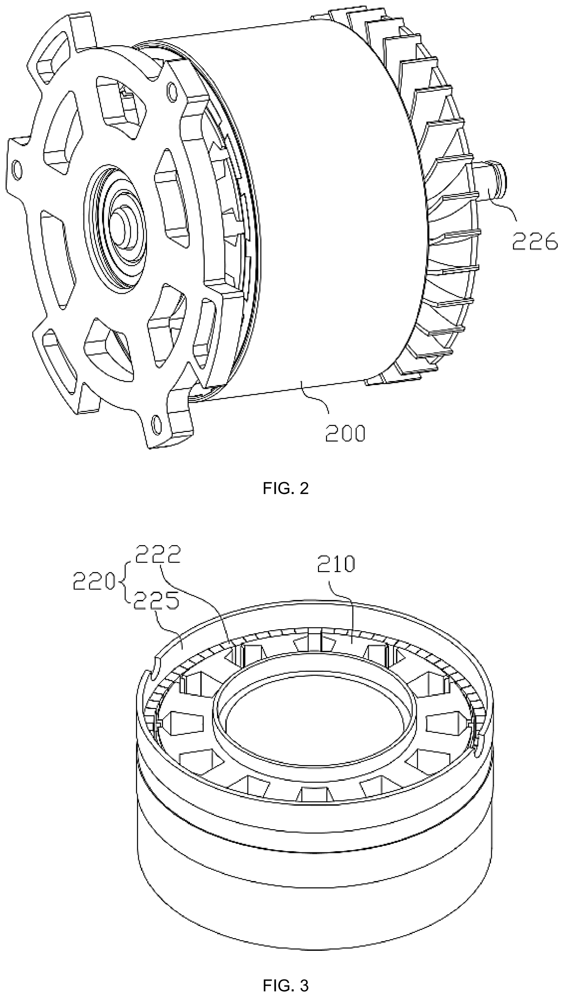

Referring to FIGS. 1 and 2, the chainsaw 100 further includes a first drive unit for outputting power. In this example, the first drive unit includes at least a motor, which may also be referred to as an electric motor 200. For ease of description, the electric motor 200 is used as an example for further explanation. The electric motor 200 is disposed in the main housing portion 17. Specifically, the electric motor 200 has an output shaft 226 for driving the sprocket to rotate. The sprocket drives the saw chain 21. The saw chain 21 surrounds the edge of the guide plate 22 and can be cyclically guided by the guide plate 22. The guide plate 22 is basically distributed along the front and rear direction, an end of the guide plate 22 is supported on the housing 10, and the other end of the guide plate 22 extends out of the housing 10 along the lengthwise direction of the housing 10. For the chainsaw 100 driven by the electric motor 200, especially the chainsaw 100 driven by direct current, due to the structural limitation of the chainsaw 100, the overall weight of the chainsaw 100 to which the power supply device 30 is mounted is relatively large. To reduce the fatigue of the user when operating the chainsaw 100 for a long time, the center of gravity of the chainsaw 100 needs to be set close to the front handle 12. Specifically, the electric motor 200 and the saw chain 21 of the chainsaw 100 are disposed at the front end of the chainsaw 100. The power supply device 30 is disposed at the rear end of the chainsaw 100 relative to the electric motor 200. The rear handle 11 is disposed on the upper side of the power supply device 30.

In some examples, the rated output power of the electric motor 200 ranges from 3000 W to 7000 W, and the maximum rotational speed range is greater than or equal to 20000 rpm. The rotor diameter of the electric motor 200 is greater than or equal to 50 mm and less than or equal to 105 mm. Optionally, the rotor diameter of the electric motor 200 is greater than or equal to 80 mm and less than or equal to 95 mm. The rated power of the electric motor 200 is greater than or equal to 1000 W and less than or equal to 7000 W.

Referring to FIGS. 2 to 8, regarding the structure of the electric motor 200, in this example, the electric motor 200 includes a stator 210 and a rotor 220 that is at least partially disposed on the outer side of the stator 210 and rotates relative to the stator 210. The rotor 220 includes a fastening sleeve 225 and magnetic steels 222 disposed within the fastening sleeve 225. The electric motor 200 is electrically connected to the power supply device 30, and the electric motor 200 is powered by the power supply device 30. An output portion includes the saw chain 21 driven directly or indirectly by the electric motor 200. Optionally, the electric motor 200 may be an outrunner.

The material of the fastening sleeve 225 is a non-magnetic material, and the material of the fastening sleeve 225 is a non-magnetic metal material or a non-metallic material. Compared with magnetic materials, non-magnetic materials offer more options and have a lower density so that the mass of the electric motor 200 can be reduced, thereby reducing the mass of the entire power tool and improving the convenience of use. Multiple magnetic steels 222 are provided and form multiple poles. The magnetic steels 222 of multiple poles are arranged in a ring around an axis L and connected end to end in sequence. The magnetic steels 222 of each pole contain multiple magnetic steels 222 with different magnetic pole directions.

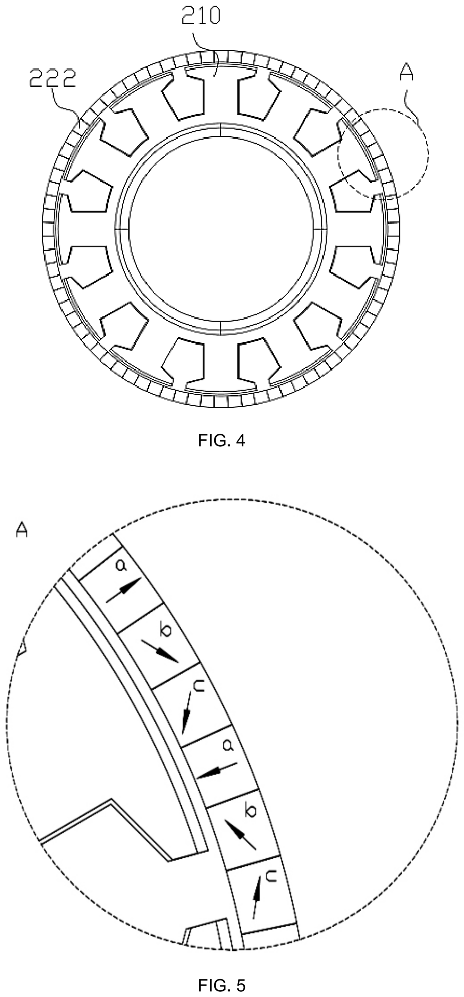

In some examples, referring to FIGS. 3 and 4, multiple magnetic steels 222 are arranged in a ring around the axis L and disposed on the inner wall of the fastening sleeve 225. Multiple magnetic steels 222 form multiple magnetic poles, and at least two magnetic steels 222 of each magnetic pole have different magnetization directions. In this manner, compared with the traditional electric motor architecture, in the present application, the magnetization directions of the magnetic steels 222 are set, thereby greatly increasing the magnetic field strength on one side of the magnetic steels 222, greatly weakening the magnetic field strength on the other side of the magnetic steels 222, effectively reducing the volume of the electric motor, and improving the power density of the electric motor. Optionally, the magnetic steels 222 in the present application adopt a Halbach magnet array.

Referring to FIG. 5, three magnetic steels a, b, and c form one magnetic pole, and the magnetization directions of the three magnetic steels 222 of each magnetic pole are different. The direction of the arrow is the magnetization direction of the magnetic steel 222. It is to be noted that the dimensions of the magnetic steels 222 of each magnetic pole may be configured to be different.

In some examples, the magnetic steels 222 of each pole contain M magnetic steels 222, where M is greater than or equal to 2 and less than or equal to 7. The number of magnetic steels 222 of each pole may be set according to actual requirements and is not limited thereto. In some examples, the magnetic steels 222 of each pole contain M magnetic steels 222, where M is greater than or equal to 4 and less than or equal to 5. In this example, the magnetic steels 222 of each pole contain five magnetic steels 222. The magnetic pole directions of the magnetic steels 222 of each pole are different. The specific magnetic pole directions may be set according to actual conditions. The method for determining the magnetic pole direction is well known to those skilled in the art, and the details are not repeated here.

In some examples, the sectional shape of the windings on the stator 210 is polygonal or circular. For example, the sectional shape of the windings on the stator 210 is triangular, quadrilateral, or pentagonal. When the sectional shape of the windings on the stator 210 is quadrilateral, the sectional shape of the windings on the stator 210 may be rectangular or square. In some examples, the sectional shape of the windings on the stator 210 may be hexagonal, heptagonal, or even octagonal.

In some examples, the windings on the stator 210 are wound horizontally or vertically.

The wire outlet ends of the windings on the stator 210 are led out through a busbar or a printed circuit board (PCB). The method in which the wire outlet ends are led out through the PCB features simple assembly, has good interchangeability and maintainability, and is suitable for standardized mass production. The method in which the wire outlet ends are led out through the busbar features good connection stability and strong vibration resistance and is suitable for harsh working conditions. During use, the structure and application scenario of the electric motor 200 may be considered as a whole to select a reasonable method for leading out the wire outlet ends.

In some examples, the stator 210 is made of an amorphous alloy or a nanocrystalline material. The amorphous alloys exhibit excellent performance and simple processing and are superior to silicon steel sheets in terms of magnetic permeability and iron loss. Nanocrystalline can significantly improve the performance and efficiency of the electric motor 200 due to the excellent physical and chemical properties.

In some examples, the included angle between two opposite surfaces of any two adjacent magnetic steels 222 is X, and X is greater than or equal to 0° and less than or equal to 5°. Through the preceding angle setting, the gap between two adjacent magnetic steels 222 can be properly adjusted, thereby reducing the manufacturing difficulty of the magnetic steels 222 and reducing the cost. In some examples, the included angle between two opposite surfaces of any two adjacent magnetic steels 222 is X, and X is equal to 0°. In this manner, each of the magnetic steels 222 has a fan-shaped structure, thereby maximizing the volume of the magnetic steel 222, which is conducive to improving the power density of the electric motor 200.

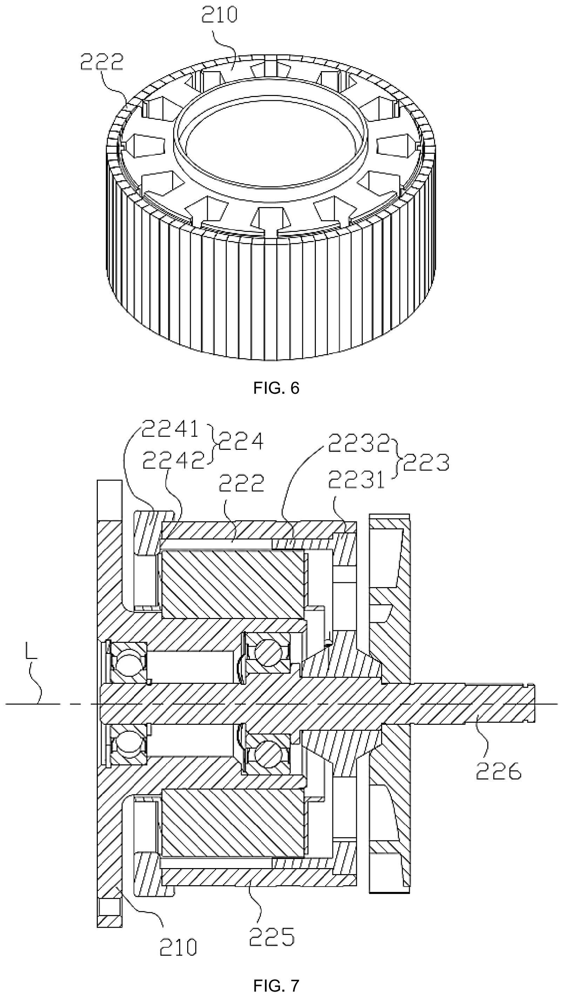

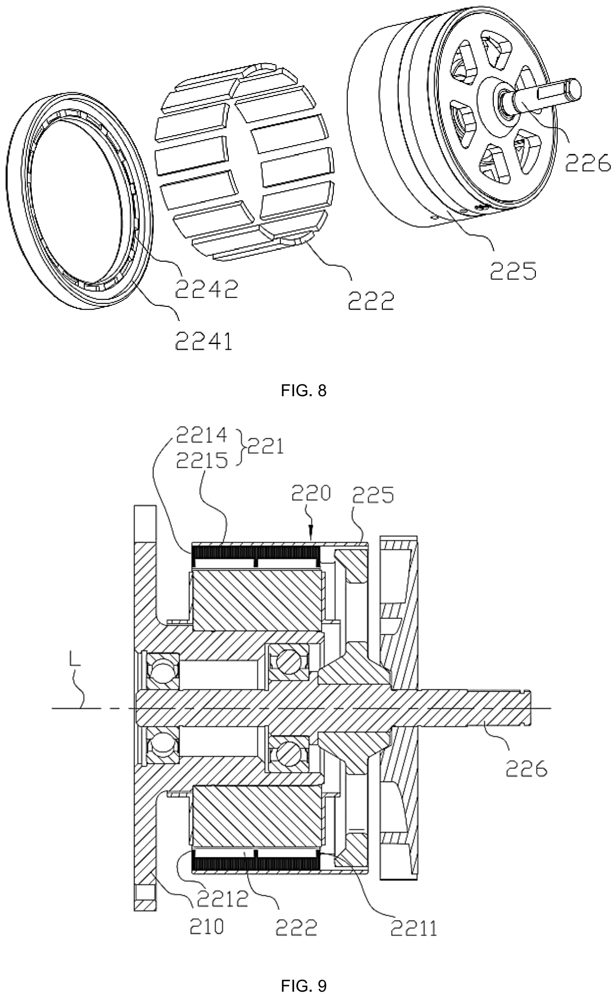

Referring to FIGS. 7 and 8, in some examples, the rotor 220 further includes a first fixing member 223 fixed to an end of the fastening sleeve 225, and the first fixing member 223 is used for constraining the magnetic steels 222 axially and/or circumferentially. In this manner, the magnetic steels 222 can be more stable relative to the stator 210, thereby improving usage safety. Specifically, the first fixing member 223 includes a first connecting portion 2231 and first fixing portions 2232 connected to the first connecting portion 2231, the first connecting portion 2231 is connected to the fastening sleeve 225, and the first fixing portions 2232 are used for constraining the magnetic steels 222. In this example, multiple first fixing portions 2232 are provided and strip-shaped, the multiple first fixing portions 2232 are evenly arranged around the axis L, every two adjacent first fixing portions 2232 and the first connecting portion 2231 form a fixing groove, an end of the magnetic steel 222 is located in the fixing groove, and the magnetic steel 222 is circumferentially limited by two sidewalls of the fixing groove and axially limited by the first connecting portion 2231. The first fixing member 223 in this example is only applicable to the examples in which the included angle between adjacent magnetic steels 222 is not zero.

In this example, the first connecting portion 2231 and the first fixing portions 2232 are integrally formed.

The rotor 220 further includes a second fixing member 224 fixed to the other end of the fastening sleeve 225, and the second fixing member 224 is used for constraining the magnetic steels 222 radially. Specifically, the second fixing member 224 is provided with a second connecting portion 2241 and second fixing portions 2242 disposed on the second connecting portion 2241, the second connecting portion 2241 is connected to the fastening sleeve 225, and the second fixing portions 2242 are used for constraining the magnetic steels 222. In this example, the second fixing portions 2242 are limiting grooves disposed on the second connecting portion 2241, multiple limiting grooves are provided and evenly arranged around the axis L, the limiting groove has a groove bottom, two circumferential sidewalls, and two radial sidewalls, the other end of the magnetic steel 222 is located in the limiting groove, the magnetic steel 222 is axially limited by the groove bottom of the limiting groove, the magnetic steel 222 is circumferentially limited by the circumferential sidewalls of the limiting groove, and the magnetic steel 222 is radially limited by the radial sidewalls of the limiting groove. In some examples, the limiting groove may be annular. The other end of each of the magnetic steels 222 is fixed in the limiting groove. In this example, the limiting grooves may be applicable to the examples in which the included angle between the magnetic steels 222 is zero or non-zero.

In this example, the second connecting portion 2241 and the second fixing portions 2242 are integrally formed.

In the examples shown in FIGS. 7 and 8, the magnetic steels 222 may not adopt a Halbach magnet array.

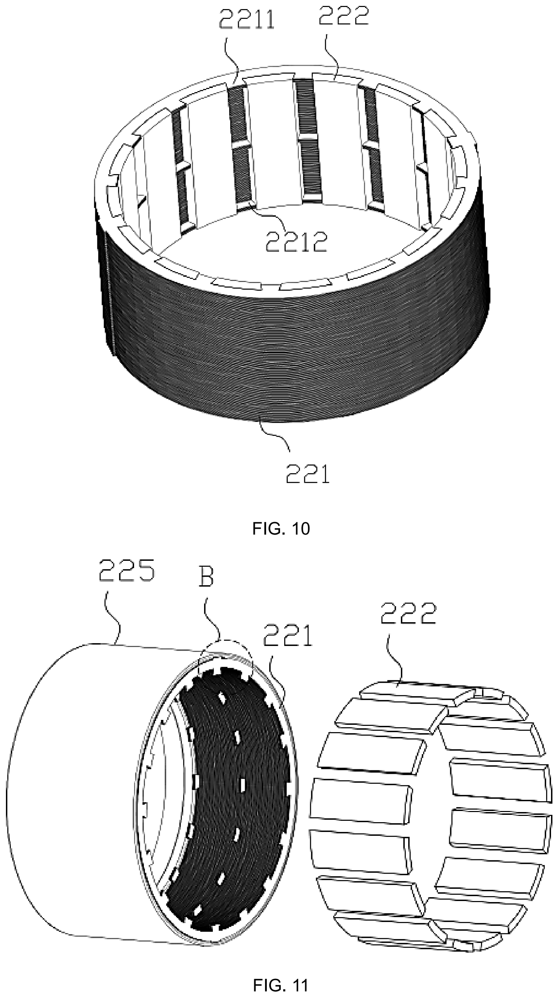

Referring to FIGS. 9 to 13, in some examples, the electric motor 200 includes the stator 210 and the rotor 220 rotating relative to the stator 210, the rotor 220 includes a rotor core 221 and the magnetic steels 222 disposed on the rotor core 221, the rotor core 221 includes limiting portions arranged at intervals around the axis L, and the limiting portions are used for fixing the magnetic steels 222. The limiting portions are used for fixing the magnetic steels 222 so that the problem of the magnetic steels 222 falling off from the rotor 220 can be solved. Compared with the limiting portions with an integrated structure in the related art, the limiting portions are arranged at intervals so that the weight can be effectively reduced, thereby reducing the loss of the electric motor 200 and improving the efficiency of the electric motor 200.

In some examples, the limiting portion includes a first limiting portion 2211 and a second limiting portion 2212, one of the first limiting portion 2211 and the second limiting portion 2212 is located at the head of the rotor core 221, and the other one of the first limiting portion 2211 and the second limiting portion 2212 is located at the tail of the rotor core 221. In this manner, two ends of the magnetic steel 222 can be supported, thereby improving the stability of the magnetic steel 222.

In some examples, the limiting portion includes the first limiting portion 2211 and the second limiting portion 2212, one of the first limiting portion 2211 and the second limiting portion 2212 is located in the middle of the rotor core 221, and the other one of the first limiting portion 2211 and the second limiting portion 2212 is located at the head and/or tail of the rotor core 221. In this example, three examples may be provided regarding the positional relationship between the first limiting portion 2211 and the second limiting portion 2212. In the first example, the limiting portion includes the first limiting portion 2211 and the second limiting portion 2212, one of the first limiting portion 2211 and the second limiting portion 2212 is located in the middle of the rotor core 221, and the other one of the first limiting portion 2211 and the second limiting portion 2212 is located at the head of the rotor core 221. In the second example, the limiting portion includes the first limiting portion 2211 and the second limiting portion 2212, one of the first limiting portion 2211 and the second limiting portion 2212 is located in the middle of the rotor core 221, and the other one of the first limiting portion 2211 and the second limiting portion 2212 is located at the tail of the rotor core 221. In the third example, the limiting portion includes the first limiting portion 2211 and the second limiting portion 2212, one of the first limiting portion 2211 and the second limiting portion 2212 is located in the middle of the rotor core 221, and the other one of the first limiting portion 2211 and the second limiting portion 2212 is located at the head and tail of the rotor core 221. In the third example, for example, the first limiting portion 2211 is located in the middle of the rotor core 221, and two second limiting portions 2212 are provided at the head and tail of the rotor core 221, respectively. In this manner, the magnetic steel 222 can be supported at three positions: the head, the middle, and the tail, making the magnetic steel 222 more robust.

In some examples, the limiting portion includes the first limiting portion 2211, and the thickness of the first limiting portion 2211 ranges from 1 mm to 2 mm. In this example, the thickness of the first limiting portion 2211 refers to the dimension of the first limiting portion 2211 along the direction of the axis L. The limiting portion includes the second limiting portion 2212, and the thickness of the second limiting portion 2212 ranges from 1 mm to 2 mm. In this example, the thickness of the second limiting portion 2212 refers to the dimension of the second limiting portion 2212 along the direction of the axis L. The thicknesses of the first limiting portion 2211 and the second limiting portion 2212 may be the same or different. When the thicknesses of the first limiting portion 2211 and the second limiting portion 2212 are the same, the thicknesses may both be 1.5 mm. In other examples, the thickness of each of the first limiting portion 2211 and the second limiting portion 2212 may be 0.5 mm, 2.1 mm, 3 mm, or 5 mm.

In some examples, the length of the limiting portion is limited in terms of proportion, and the ratio of the total length of the limiting portion in the direction of the axis L to the length of the magnetic steel 222 in the direction of the axis L ranges from 0.01 to 0.9. In some examples, the ratio of the total length of the limiting portion in the direction of the axis L to the length of the magnetic steel 222 in the direction of the axis L ranges from 0.1 to 0.2.

In some examples, one or more limiting portions are provided. When one limiting portion is provided, the length of the limiting portion may be appropriately larger; and when multiple limiting portions are provided, the length of the limiting portion may be appropriately smaller.

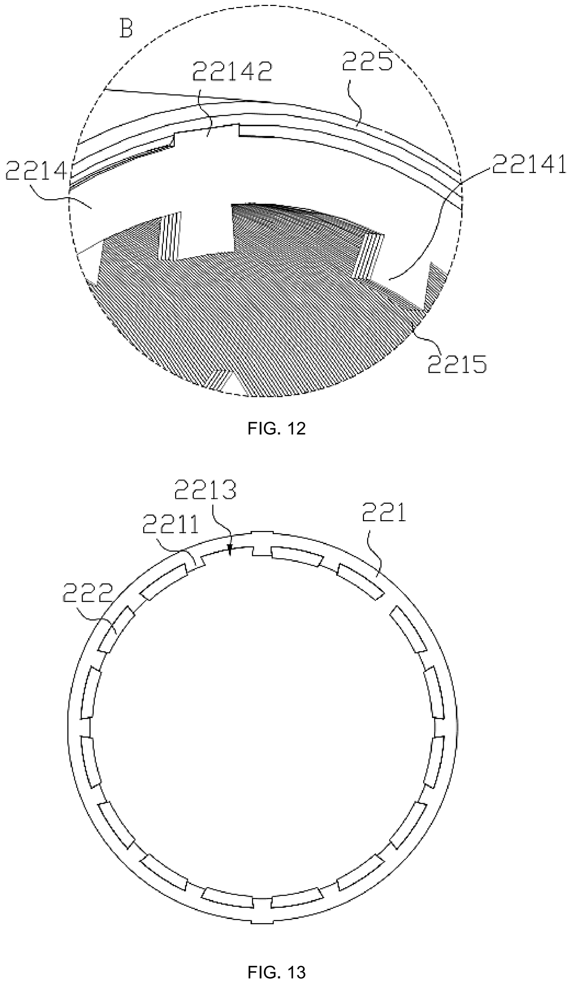

Referring to FIGS. 12 and 13, the limiting portion forms a dovetail groove 2213, and the magnetic steel 222 is inserted into the dovetail groove 2213 along the direction of the axis L of the rotor core 221. The dovetail groove 2213 is provided, which is conducive to radially limiting the magnetic steel 222, that is, preventing the magnetic steel 222 from moving in the radial direction of the rotor core 221. Specifically, the structure of the dovetail groove 2213 may be trapezoidal or triangular. In other words, the distance between two sidewalls of the dovetail groove 2213 may gradually decrease or may first increase and then decrease along the direction approaching the axis L.

In some examples, the limiting portion is lower than the magnetic steel 222 in the circumferential direction. In other words, in the radial direction of the electric motor 200, the depth of the dovetail groove 2213 is less than the thickness of the magnetic steel 222. In this manner, the limiting portion is prevented from being excessively high and affecting the stator 210. Under the premise that the gap between the stator 210 and the rotor 220 remains unchanged, the thickness of the magnetic steel 222 is increased as much as possible, thereby improving the performance of the electric motor 200.

In some examples, the magnetic steel 222 is fan-shaped and includes an inner arc and an outer arc, the inner arc and the outer arc are concentrically arranged, and the distance between the center of the inner arc or the outer arc and the axis L of the rotor core 221 ranges from 50 mm to 100 mm. In this manner, the magnetic steel 222 can better fit into the dovetail groove 2213 with a trapezoidal structure. In other examples, the shape of the magnetic steel 222 is not limited to the fan shape and may be configured according to the structure of the dovetail groove 2213.

Referring to FIGS. 9 and 12, the rotor core 221 includes multiple laminations stacked along the direction of the axis L, and the laminations are made of silicon steel. The multiple laminations have at least two different shapes. The laminations include first laminations 2214 each having a first shape and second laminations 2215 each having a second shape, and the projections of the first lamination 2214 and the second lamination 2215 on a first plane have different shapes. The first plane is perpendicular to the output shaft 226. The first lamination 2214 has first protrusions 22141 and second protrusions 22142. After multiple first laminations 2214 are stacked, multiple first protrusions 22141 form the first limiting portion 2211 or the second limiting portion 2212. The second lamination 2215 also has the second protrusions 22142. After multiple first laminations 2214 and multiple second laminations 2215 are stacked, multiple second protrusions 22142 form clamping platforms. The clamping platforms mate with clamping grooves of the fastening sleeve 225 to prevent the rotor core 221 from rotating about the axis L relative to the fastening sleeve 225. The material of the lamination may be another material and is not limited to the preceding material. The laminations may have three or four shapes, which are not limited to the preceding example.

The rotor 220 further includes the fastening sleeve 225 sleeved on the outer circumference of the rotor core 221, and the fastening sleeve 225 has no magnetic conductivity. In this manner, the rotor core 221 formed by the laminations can be more robust.

In some examples, the first fixing member 223 and the second fixing member 224 may be fixed on the rotor core 221.

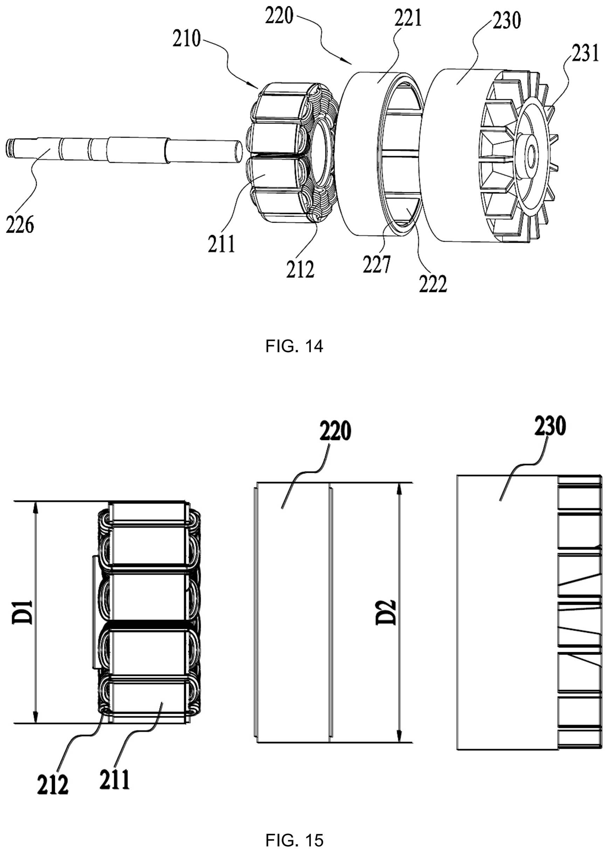

In some examples, referring to FIGS. 14 to 23, the stator 210 and the rotor 220 are nested with each other. In the case where the electric motor is an outrunner, the stator 210 is disposed inside radially while the rotor 220 is at least partially disposed on the outer side of the stator 210 and rotates relative to the stator 210. In the case where the electric motor is an inrunner, the stator 210 is disposed outside radially while the rotor 220 is at least partially disposed on the inner side of the stator 210 and rotates relative to the stator 210. In some examples, the electric motor is a brushless electric motor. In some examples, the electric motor is a permanent-magnet synchronous motor. A permanent-magnet synchronous motor with an outer rotor is mainly described below. The rotor 220 includes the rotor core 221 and the magnetic steels 222 fixed to the rotor core 221. The stator 210 includes a stator core 211 and stator windings 212 wound around the stator core 211. The rotor core 221 and the magnetic steels 222 of the rotor 220 are sleeved outside the preceding stator core 211 and stator windings 212 of the stator 210.

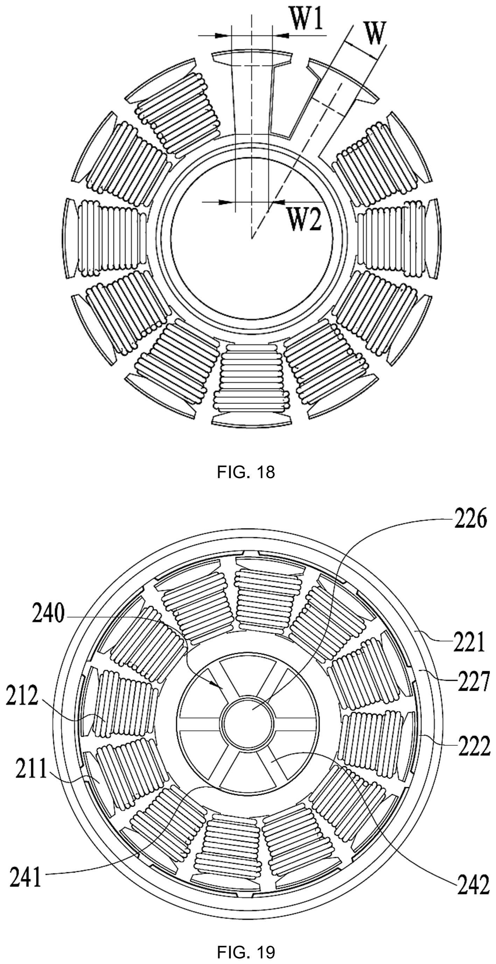

In the present application, a support member 240 with a rim and spoke structure is provided in the electric motor 200 of the power tool. As shown in FIG. 19, the preceding support member 240 is disposed at the radial center of the stator 210. The support member 240 includes a rim portion 241 and a spoke portion 242. The rim portion 241 forms the outer edge of the support member 240, and the spoke portion 242 in the rim portion 241 is connected to the rim portion 241 and formed with a through hole through which the output shaft 226 can pass. In some examples, the preceding permanent-magnet synchronous motor with the outer rotor is used as an example. The support member 240 can support the stator 210 on the outer circumference of the support member 240. The rim portion 241 supports the stator core 211. The spoke portion 242 includes multiple spokes extending radially inwards from the rim portion 241. The multiple spokes do not intersect with each other and form the through hole through which the output shaft 226 can pass at the radial center of the stator 210. In some examples, the rim portion 241 includes an inner rim and an outer rim. The outer rim supports the stator core 211. The inner rim forms the through hole for the output shaft 226 to pass through. The multiple spokes of the spoke portion 242 are connected between the inner and outer rims described above. The support member 240 provides a large hollow space for the stator 210 and the rotor 220 of the electric motor 200 through the rim and spoke structure. Compared with a common bearing support solution, this solution significantly improves the heat dissipation performance. Moreover, the weight and cost of the electric motor 200 can be reduced.

In some examples, the preceding support member is made of metal or modified plastic. The used metal or modified plastic has the characteristics of having a light weight and excellent heat dissipation performance so that the improvement described above can be better achieved and technological implementation is facilitated. In some examples, the preceding support member is made of aluminum. In some other examples, the preceding support member is made of thermoplastic or thermosetting plastic.

In some examples, the power density of the electric motor 200 is greater than or equal to 2000 W/kg. Preferably, in some examples, the power density of the electric motor 200 is greater than or equal to 3000 W/kg. The power density of the electric motor 200 may refer to the ratio of the rated power of the electric motor 200 to the mass of the essential components of the electric motor 200. In some examples, the no-load rotational speed of the electric motor 200 is higher than or equal to 10000 rpm and lower than or equal to 17000 rpm. In some other examples, the outer diameter of the electric motor 200 is greater than or equal to 50 mm. Preferably, in some examples, the outer diameter of the electric motor 200 is greater than or equal to 50 mm and less than or equal to 105 mm. Preferably, in some examples, the outer diameter of the electric motor 200 is greater than or equal to 80 mm and less than or equal to 95 mm.

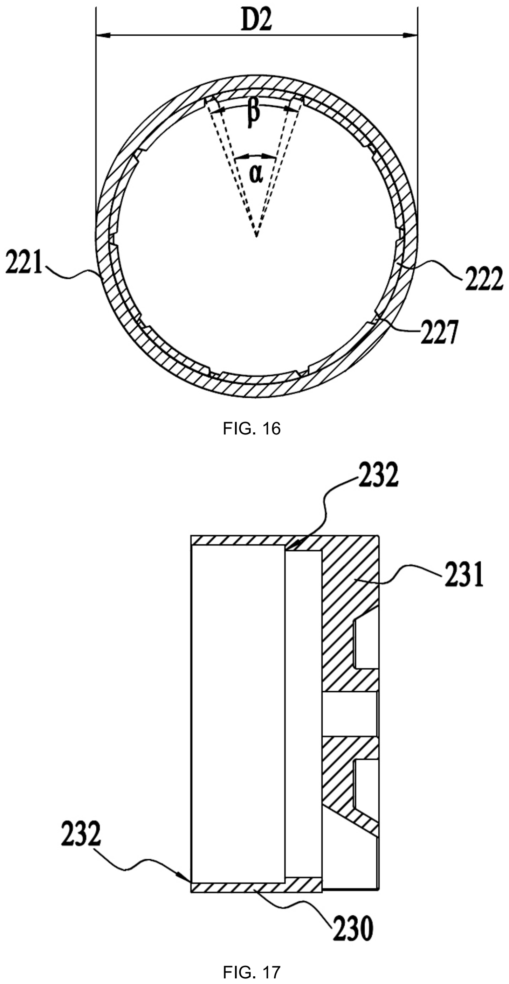

In some examples, the electric motor 200 is an outrunner, and the ratio of the outer diameter D1 of the stator 210 of the electric motor 200 to the outer diameter D2 of the rotor 220 of the electric motor 200 is greater than or equal to 0.7 and less than 1. As shown in FIGS. 15 and 16, the outer diameter D1 of the stator 210 of the electric motor 200 may refer to the outer diameter of the stator core 211, and the outer diameter D2 of the rotor 220 of the electric motor 200 may refer to the outer diameter of the rotor core 221. Preferably, in some examples, the ratio of the outer diameter D1 of the stator 210 of the electric motor 200 to the outer diameter D2 of the rotor 220 of the electric motor 200 is greater than or equal to 0.8 and less than 1 so that the stator 210 and the rotor 220 more compactly constitute the preceding electric motor 200, thereby reducing the dimension of the electric motor 200.

In some examples, the pole arc coefficient of the rotor 220 of the electric motor 200 is greater than or equal to 0.6 and less than 1. The pole arc coefficient of the permanent-magnet synchronous motor may be defined through the arc length and pole pitch of the magnetic steel 222 of the rotor. As shown in FIG. 16, the pole arc coefficient of the rotor 220 refers to the ratio of the arc length α of the magnetic steel 222 of the rotor to the corresponding pole pitch β of the magnetic steel 222 of the rotor. Preferably, in some examples, the pole arc coefficient of the rotor 220 of the electric motor 200 is greater than or equal to 0.7 and less than 1.

In some examples, the magnetic steels 222 in the rotor 220 are fixed to the rotor core 221 through overmolding. As shown in FIGS. 14, 16, and 19, an electric motor housing 230, the rotor core 221, and the magnetic steels 222 of the rotor are disposed coaxially. The rotor core 221 is fixed to the electric motor housing 230. The magnetic steels 222 of the rotor are fixed to the rotor core 221 through plastic parts 227 such as thermoplastic or thermosetting plastic during processing. Specifically, the projection of the magnetic steel 222 of the rotor along the axial direction of the electric motor 200 may be in the shape of an inverted trapezoid or another shape that makes it more difficult for the magnetic steel 222 to fall off from the plastic parts 227. The lower base of the magnetic steel 222 in the shape of an inverted trapezoid may be closer to the rotor core 221 than the upper base of the magnetic steel 222. In some examples, the electric motor housing 230 is made of aluminum, and the electric motor housing 230 is mounted with the rotor core 221 through shrink-fitting. In some examples, limiting bosses 232 for limiting the rotor core 221 in the axial direction are further disposed on the inner wall of the electric motor housing 230, thereby enhancing the fixing effect of the electric motor housing 230 on the rotor core 221.

In some examples, the electric motor 200 further includes the electric motor housing 230 and a fan 231 integrally formed with the electric motor housing 230. The fan 231 is disposed on the output shaft 226 of the electric motor 200 and is located in a plane perpendicular to the output shaft 226 of the electric motor 200. As shown in FIGS. 14 and 17, the fan 231 is integrally formed with the electric motor housing 230. The fan 231 is disposed on the output shaft 226 of the electric motor 200. The output shaft 226 of the electric motor 200 may have an interference fit with the electric motor housing 230 to ensure a stable connection. Along the axial direction of the electric motor 200, the electric motor housing 230 is sequentially provided with the fan 231, the limiting boss 232, a housing body, and another limiting boss 232 from the non-output end to the output end. The rotor core 221 is supported and limited by the preceding limiting bosses 232 and is located in the housing body.

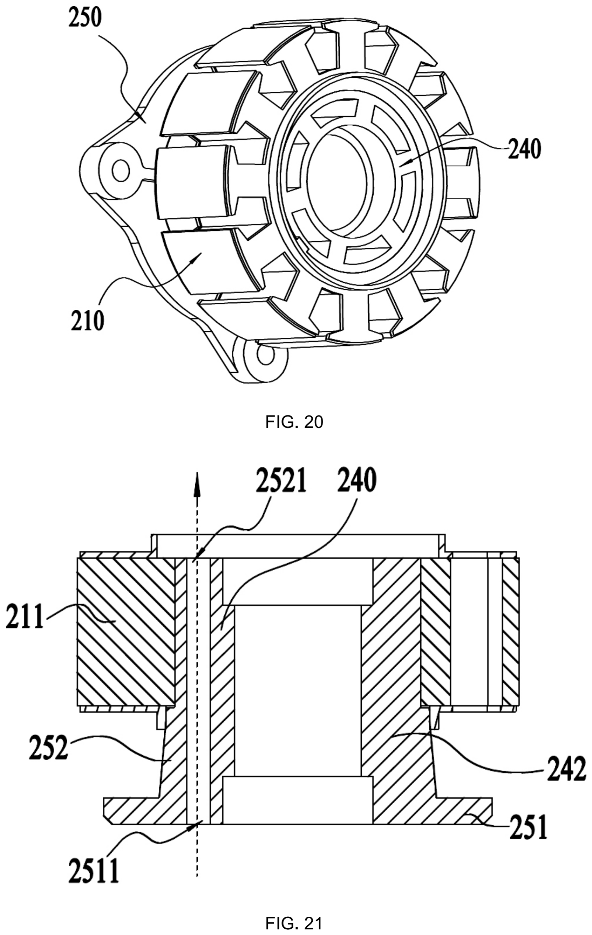

In some examples, the electric motor 200 further includes a bracket 250. The stator 210, the rotor 220, the output shaft 226, the support member 240, and the bracket 250 are disposed coaxially. The stator 210, the rotor 220, the output shaft 226, and the support member 240 may be sleeved on or inserted through the bracket 250. In this example, the bracket 250 is formed with an air inlet 2511 and an air outlet 2521 through which the cooling airflow can pass, or the bracket 250 mates with the preceding components to form the air inlet 2511 and the air outlet 2521. Specifically, as shown in FIGS. 20 to 23, the bracket 250 may include a base 251 and a tubular component 252. The base 251 is connected to or integrally formed with the tubular component 252. The plane where the base 251 is located is basically perpendicular to the straight line in which the tubular component 252 is located. The base 251 is axially away from the fan 231. The stator 210, the rotor 220, the output shaft 226, and the support member 240 can be sleeved on or inserted through the tubular component 252. The base 251 of the bracket is provided with the air inlet 2511 extending radially or axially, and the tubular component 252 and the output shaft 226 or the support member 240 that is inserted through the tubular component 252 can form the air outlet 2521 extending axially. The cooling airflow enters through the air inlet 2511, carries away the heat from the surfaces of the stator 210 and/or the support member 240 fitting snugly with the bracket 250, and then exits through the air outlet 2521.

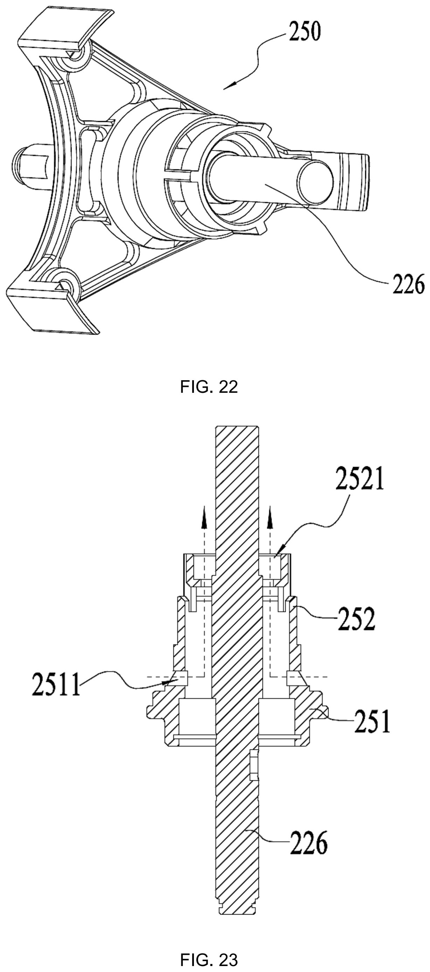

In some examples, the support member 240 is connected to or integrally formed with the bracket 250. As shown in FIG. 20, the support member 240 with the rim and spoke structure is disposed in the tubular component 252 of the bracket 250. The output shaft 226 is inserted through the support member 240 while the stator 210 and the rotor 220 are sleeved outside the tubular component 252. The bracket 250 mates with the support member 240 to form an axially extending airflow channel so that the heat from the stator 210 fitting snugly with the periphery of the bracket 250 and the heat from the support member 240 in the airflow channel can be effectively dissipated. In some other examples, as shown in FIGS. 22 and 23, the air inlet 2511 extends radially in the base 251, the tubular component 252 mates with the output shaft 226 inserted through the tubular component 252 to form an airflow channel, the air outlet 2521 extends axially between the tubular component 252 and the output shaft 226, and the stator 210, the rotor 220, and the support member 240 can be sleeved outside the tubular component 252 of the bracket 250. In some other examples, the projection of the support member 240 and the projection of the bracket 250 in the axial direction of the electric motor 200 may partially overlap, and/or the projection of the support member 240 and the projection of the bracket 250 in the radial direction of the electric motor 200 may partially overlap or may not overlap.

In some examples, the preceding stator core 211 is circumferentially provided with multiple radially extending teeth. Each of the preceding stator windings 212 is wound around a respective one of the teeth, and the width of each of the teeth of the stator core 211 is not constant along the radial direction. As shown in FIG. 18, the width W of each of the teeth of the stator core 211 refers to the width of each of the teeth in a direction perpendicular to the extension direction of each of the teeth. In some examples, for the preceding tooth with a width not constant along the radial direction, the ratio of the maximum width of the tooth to the minimum width of the tooth is greater than 1 and less than or equal to 1.8. As shown in FIG. 18, for the stator core 211 of the electric motor 200, the top of the tooth has the maximum tooth width, that is, W1, and the bottom of the tooth has the minimum tooth width, that is, W2. The ratio of W1 to W2 is within a range of 1 to 1.8. The top of the tooth refers to the end of the tooth away from the yoke portion of the stator core, and the bottom of the tooth refers to the end of the tooth adjacent to the yoke portion of the stator core. Preferably, in some examples, the ratio of the maximum width of the tooth to the minimum width of the tooth is greater than 1 and less than or equal to 1.5.

In some examples, the stator windings 212 wound on different teeth of the stator core 211 belong to the same phase or different phases. A three-phase electric motor is used as an example. Multiple windings wound on multiple teeth may belong to an A phase of the motor while multiple windings wound on other teeth may belong to a B phase of the motor. Various specific winding sequences and connection relationships may exist. In this example, two stator windings 212 that belong to the same phase may have different numbers of turns. The number of turns of the stator winding 212 refers to the number of wires wound in parallel around a respective tooth. In some examples, the electric motor 200 is provided with 10 poles and 12 slots, 10 magnetic steels 222 of the rotor are provided, and the stator core 211 has 12 teeth. It is to be understood that, in other examples, the number of magnetic steels 222 of the rotor and the number of teeth of the stator 210 are adjustable according to actual scenarios.

The numerical values of the related parameters such as the ratio of the outer diameter of the stator 210 to the outer diameter of the rotor 220, the pole arc coefficient of the rotor 220, the tooth width of the stator core 211, and the number of turns of the stator winding 212 are set to ensure the accurate and efficient operation of the high-power electric motor 200. With these parameters, a slot fill factor can be increased, a harmonic distortion rate can be reduced, torque fluctuation can be stabilized, and motor noise can be suppressed according to the simulation and experiment.

In some examples, as shown in Table 1 and Table 2 below, the power tools may be a blower, a string trimmer, a mower, and a chainsaw. The blower is a high-speed power tool, the chainsaw is a medium-speed power tool, and the string trimmer and the mower are low-speed power tools. The air gap ratio of each of the blower, the string trimmer, the mower, and the chainsaw is greater than or equal to 0.7. Optionally, the air gap ratio may be greater than or equal to 0.8.

In some examples, the rated rotational speed of the electric motor of the blower is greater than or equal to 20000 rpm. Optionally, the rated rotational speed of the electric motor may be 23000 rpm. Optionally, the rated rotational speed of the electric motor may be 27000 rpm. In some examples, the ratio of the rated power of the electric motor of the blower to the volume of the stator is greater than or equal to 50 W/cm3. Optionally, the ratio of the rated power of the electric motor to the volume of the stator may be 62.1 W/cm3. Optionally, the ratio of the rated power of the electric motor to the volume of the stator may be 75.8 W/cm3.

In some examples, the rated rotational speed of the electric motor of the chainsaw is greater than or equal to 10000 rpm and less than or equal to 20000 rpm. In some examples, the rated rotational speed of the electric motor of the chainsaw is greater than or equal to 10000 rpm and less than or equal to 17000 rpm. Optionally, the rated rotational speed of the electric motor may be 11000 rpm. Optionally, the rated rotational speed of the electric motor may be 11500 rpm. In some examples, the ratio of the rated power of the electric motor of the chainsaw to the weight of the stator is greater than or equal to 6 W/g and less than or equal to 14 W/g. Optionally, the ratio of the rated power of the electric motor to the weight of the stator is 6.5 W/g. Optionally, the ratio of the rated power of the electric motor to the weight of the stator is 13.9 W/g.

**Table 1**

| Product | Electric motor platform | Rotor diameter (mm) | Unilateral air gap length | Stator diameter (mm) | Operating rotational speed (rpm) | Stack length (mm) |
|---|---|---|---|---|---|---|
| Blower | φ35 | 35 | 0.5 | 28 | 27000 | 30 |
| Blower | φ50 | 50 | 0.5 | 42 | 23000 | 25 |
| String trimmer | φ50 | 50 | 0.5 | 42 | 8000 | 25 |
| Mower | φ105 | 105 | 0.5 | 92 | 3650 | 20 |
| Chainsaw | φ90 | 90 | 0.5 | 77 | 11000 | 25 |
| Chainsaw | φ67 | 67 | 0.5 | 55 | 11500 | 35 |

**Table 2**

| Product | Operating output power (W) | Stator assembly weight (g) | Stator assembly volume (cm³) | Power/stator volume (W/ cm³) | Power/stator weight (W/g) | Air gap ratio |
|---|---|---|---|---|---|---|
| Blower | 1400 | 90 | 18.5 | 75.8 | 15.5 | 0.8 |
| Blower | 2150 | 191 | 34.6 | 62.1 | 11.3 | 0.84 |
| String trimmer | 730 | 191 | 34.6 | 21.1 | 3.8 | 0.84 |
| Mower | 1800 | 700 | 13.3 | 13.5 | 2.6 | 0.88 |
| Chainsaw | 5000 | 360 | 11.6 | 43.0 | 13.9 | 0.86 |
| Chainsaw | 3100 | 480 | 83.2 | 37.3 | 6.5 | 0.82 |

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A power tool, comprising:
a motor for providing power for the power tool, wherein the motor comprises a stator and a rotor rotating relative to the stator, and the rotor comprises a rotor core and magnetic steels disposed on the rotor core;
a power supply device electrically connected to at least the motor; and
an output portion driven by the motor;
wherein the rotor core comprises limiting portions arranged at intervals around an axis **L,** and the limiting portions are used for fixing the magnetic steels.

2. The power tool of claim 1, wherein a limiting portion of the limiting portions comprises a first limiting portion and a second limiting portion, one of the first limiting portion and the second limiting portion is located at a head of the rotor core, and another one of the first limiting portion and the second limiting portion is located at a tail of the rotor core.

3. The power tool of claim 1, wherein a limiting portion of the limiting portions comprises a first limiting portion and a second limiting portion, one of the first limiting portion and the second limiting portion is located in a middle of the rotor core, and another one of the first limiting portion and the second limiting portion is located at a head and/or tail of the rotor core.

4. The power tool of claim 1, wherein a limiting portion of the limiting portions comprises a first limiting portion, and a thickness of the first limiting portion ranges from 1 mm to 2 mm; and/or
a limiting portion of the limiting portions comprises a second limiting portion, and a thickness of the second limiting portion ranges from 1 mm to 2 mm.

5. The power tool of claim 1, wherein a limiting portion of the limiting portions forms a dovetail groove, and a magnetic steel of the magnetic steels is inserted into the dovetail groove along the direction of the axis L of the rotor core.

6. The power tool of claim 1, wherein a limiting portion of the limiting portions is lower than a magnetic steel of the magnetic steels in a circumferential direction.

7. The power tool of claim 1, wherein a magnetic steel of the magnetic steels is fan-shaped and comprises an inner arc and an outer arc, the inner arc and the outer arc are concentrically arranged, and a distance between a center of the inner arc or the outer arc and the axis L of the rotor core ranges from 50 mm to 100 mm.

8. The power tool of claim 1, wherein the rotor core comprises a plurality of laminations stacked along the direction of the axis L, and the plurality of laminations are made of silicon steel.

9. The power tool of claim 1, wherein the rotor further comprises a fastening sleeve sleeved on an outer circumference of the rotor core, and the fastening sleeve has no magnetic conductivity.

10. The power tool of claim 1, wherein the rotor further comprises a first fixing member fixed to an end of the rotor core, and the first fixing member is used for constraining the magnetic steels axially and circumferentially.

11. The power tool of claim 1, wherein the rotor further comprises a second fixing member fixed to another end of the rotor core, and the second fixing member is used for constraining the magnetic steels radially.

12. The power tool of claim 1, wherein rated output power of the motor ranges from 3000 W to 7000 W.

13. The power tool of claim 1, wherein a maximum rotational speed range of the motor is greater than or equal to 20000 rpm.

14. The power tool of claim 1, wherein the power tool comprises at least one of a chainsaw, a snow thrower, a hedge trimmer, a mower, and a direct current fan.

15. The power tool of claim 1, wherein the motor is an outrunner.

16. A power tool, comprising:
a motor for providing power for the power tool, wherein the motor comprises a stator and a rotor rotating relative to the stator, the rotor is at least partially disposed on an outer side of the stator, and the rotor comprises a rotor core and magnetic steels disposed on the rotor core;
a power supply device electrically connected to at least the motor; and
an output portion driven by the motor;
wherein the rotor core comprises a plurality of laminations arranged along a direction of an axis L, and the plurality of laminations have at least two different shapes so that the plurality of laminations comprise at least first laminations each having a first shape and second laminations each having a second shape.

17. The power tool of claim 16, wherein projections of a first lamination of the first laminations and a second lamination of the second laminations on a first plane have different shapes, and the first plane is perpendicular to an output shaft.

18. A power tool, comprising:
a motor for providing power for the power tool, wherein the motor comprises a stator and a rotor rotating relative to the stator, and the rotor comprises a rotor core and magnetic steels disposed on the rotor core;
a power supply device electrically connected to at least the motor; and
an output portion driven by the motor;
wherein limiting portions for fixing the magnetic steels are formed on an inner wall of the rotor core, and a ratio of a total length of a limiting portion of the limiting portions in a direction of an axis L to a length of a magnetic steel of the magnetic steels in the direction of the axis L ranges from 0.01 to 0.9.

19. The power tool of claim 18, wherein the ratio of the total length of the limiting portion in the direction of the axis L to the length of the magnetic steel in the direction of the axis L ranges from 0.1 to 0.2.

20. The power tool of claim 18, wherein one or more limiting portions are provided.

21. A chainsaw, comprising:
a housing;
a saw chain and a guide plate, wherein the saw chain is disposed around a periphery of the guide plate, an end of the guide plate is supported on the housing, and another end of the guide plate extends out of the housing along a lengthwise direction of the housing; and
a motor for driving the saw chain to perform cutting;
wherein a rated rotational speed of the motor is greater than or equal to 10000 rpm and less than or equal to 20000 rpm, and a ratio of rated power of the motor to weight of a stator of the motor is greater than or equal to 6 W/g and less than or equal to 14 W/g.

22. The chainsaw of claim 21, wherein the rated rotational speed of the motor is greater than or equal to 10000 rpm and less than or equal to 17000 rpm.

23. The chainsaw of claim 21, wherein a ratio of an outer diameter of the stator to an outer diameter of a rotor is greater than or equal to 0.7.

24. The chainsaw of claim 21, wherein power density of the motor is greater than or equal to 2000 W/kg.

25. The chainsaw of claim 21, wherein a support member is disposed at a radial center of the stator and comprises a rim portion and a spoke portion.

26. The chainsaw of claim 21, wherein a pole arc coefficient of a rotor of the motor is greater than or equal to 0.6 and less than 1.

27. The chainsaw of claim 21, wherein the stator comprises a stator core and stator windings, the stator core has a plurality of radially extending teeth, each of the stator windings is wound around a respective one of the plurality of teeth, a width of each of the plurality of teeth is not constant in a radial direction, and the width of each of the plurality of teeth refers to a width of each of the plurality of teeth in a direction perpendicular to an extension direction of each of the plurality of teeth.

28. The chainsaw of claim 27, wherein a ratio of a maximum width to a minimum width of each of the plurality of teeth is greater than 1 and less than or equal to 1.8.

29. The chainsaw of claim 21, wherein a rotor of the motor comprises a rotor core and magnetic steels, and the magnetic steels are fixed to the rotor core through overmolding.

30. The chainsaw of claim 25, wherein the motor further comprises a bracket, the stator and a rotor are sleeved on the bracket, the support member and the bracket are disposed coaxially, and the bracket is formed with an air inlet and an air outlet through which a cooling airflow passes.

31. The chainsaw of claim 21, wherein the motor further comprises a fan and a motor housing, and the motor housing and the fan are integrally formed.

32. The chainsaw of claim 21, wherein a rotor of the motor comprises a rotor core, and limiting bosses for limiting the rotor core in an axial direction are formed on an inner wall of a motor housing.

33. The chainsaw of claim 25, wherein the support member is made of metal or modified plastic.

34. The chainsaw of claim 21, wherein a rotor of the motor is sleeved outside the stator, and a support member is disposed inside the stator to support the stator.

35. The chainsaw of claim 21, wherein rated output power of the motor ranges from 3000 W to 7000 W.

36. A power tool, comprising:
a housing;
an output portion; and
a motor disposed in the housing, wherein the motor comprises:
a stator comprising a stator core and stator windings;
a rotor comprising a rotor core and magnetic steels and disposed on an outer circumference of the stator, wherein the rotor is rotatable relative to the stator; and
an output shaft coupled to the rotor to drive the output portion;
wherein a rated rotational speed of the motor is greater than or equal to 20000 rpm, and a ratio of rated power of the motor to a volume of the stator is greater than or equal to 50 W/cm³.

37. The power tool of claim 36, wherein the power tool is a blower.

38. The power tool of claim 36, wherein a ratio of an outer diameter of the stator to an outer diameter of the rotor is greater than or equal to 0.7.

39. A power tool, comprising:
a housing;
an output portion; and
an electric motor disposed in the housing, wherein the electric motor comprises:
a stator comprising a stator core and stator windings;
a rotor comprising a rotor core and magnetic steels, wherein the rotor is disposed on an outer circumference of the stator and is rotatable relative to the stator; and
an output shaft coupled to the rotor to drive the output portion;
wherein rated power of the electric motor is greater than or equal to 3000 W and less than or equal to 7000 W, and an air gap ratio of the electric motor is greater than or equal to 0.7.

40. The power tool of claim 39, wherein an outer diameter of the rotor is greater than or equal to 35 mm and less than or equal to 105 mm.
